# EUROPÄISCHE PATENTANMELDUNG

(11) **EP 1 352 732 A2**
(43) Veröffentlichungstag der Anmeldung: **15.10.2003**
(21) Anmeldenummer: 03008151.7
(22) Anmeldetag: 08.04.2003
(51) Int. Cl.: B29C 59/02, B29C 59/04, B41F 19/02, B41M 3/14, B41M 7/00, G03H 1/02

(54) **Substrate mit vorzugsweise transferierbaren Schichten und/oder Oberflächenstrukturen, Verfahren zu deren Herstellung und deren Verwendung**

(30) Priorität: 11.04.2002 AT 5562002
(71) Anmelder: Hueck Folien Gesellschaft m.b.H., 4342 Baumgartenberg (AT)
(72) Erfinder: Hilburger, Jahann, 92712 Pirk (DE); Kastner, Friedrich, Dr., 4710 Grieskirchen (AT); Hundeshagen, Karl Arthur, Dr., 46149 Oberhausen (AT)
(74) Vertreter: Landgraf, Elvira, Dipl.-Ing.

(57) **Zusammenfassung**

Die Erfindung betrifft beschichtete Substrate, wobei die beschichteten Substrate eine vorerst thermoplastische Lackschicht aufweisen, die gegebenenfalls nach mehreren weiteren Bearbeitungsschritten stabilisiert wird.
Die vorerst thermoplastische Lackschicht kann releasefähig eingestellt werden, sodass sich die Aufbringung einer Releaseschicht erübrigt.

## Beschreibung

Die Erfindung betrifft Substrate mit beständigen oder vorzugsweise transferierbaren Schichten und/oder Oberflächenstrukturen, ein Verfahren zu deren Herstellung und deren Verwendung.

Substrate, unter anderem auch bahnförmige Materialien, Folien, Blattgut und der gleichen, die mit unterschiedlichen strukturierten und/oder unstrukturierten Schichten und/oder mit Oberflächenstrukturen, beispielsweise Diffraktionsstrukturen, versehen sind, werden in verschiedenen Einsatzgebieten verwendet, beispielsweise in der Dekoration, als Bauelemente, insbesondere auch optische Bauelemente im technischen Bereich und in der Architektur, als Sicherheitselemente für Wertdokumente und Datenträger, als Verpackungselemente und dergleichen.

Es ist bekannt, Beugungs- bzw. Diffraktionsstrukturen, beispielsweise Beugungsgitter und dergleichen durch thermische Abformung in eine insbesondere thermoplastische Träger- bzw. Lackschicht mittels Druck und Temperatur herzustellen.
Nachteil der so hergestellten Oberflächenstrukturen ist deren geringe thermische, mechanische und chemische Beständigkeit durch das Prägen in rein thermoplastische Massen, die auch nach dem Prägen in einem gewissen Maße thermoplastisch veränderbar bleiben. Für Anwendungen als Heißsiegelfolien, beispielsweise in Verpackungen, Blister in der pharmazeutischen Industrie oder Lebensmittelverpackungen, ist die Beständigkeit der Oberflächenstrukturen, insbesondere gegen den Verarbeitungsdruck und die Verarbeitungstemperatur beim Heißsiegelvorgang und/oder bei der Sterilisation nicht ausreichend, sodass in diesem Fall der Verpackungsvorgang nicht mit den üblichen Maschinen erfolgen kann, sondern strenge Beschränkungen hinsichtlich Druck und Temperatur einzuhalten sind, oder aufwendige Zusatzeinrichtungen installiert werden müssen. Auch bei Siegelvorgängen gegen beispielsweise Stahl und auch andere Kunststoffe erweisen sich die im thermoplastischen Abformverfahren in einen rein thermoplastischen Lack hergestellten Strukturen als nicht ausreichend beständig. Ähnliche Probleme treten bei den Verfahren zur Einbettung als Sicherheitselemente in Wertdokumente, wie Banknoten, Karten und dergleichen auf, bei denen höhere Temperaturen und/oder erhöhter Druck angewendet werden muss.

Aus der WO 94/18609 ist ein Verfahren zur gleichzeitigen Replikation und direkten Applikation eines Hologramms oder eines anderen Beugungsgitters auf einen Bedruckstoff, insbesondere auf Papier oder Karton, mittels einer die Oberflächenreliefstruktur tragenden Matrize bekannt, bei dem diese Struktur in eine strahlungshärtbare Lackschicht abgeformt wird, wobei die Härtung der Lackschicht von der Matrizenseite her durch die strahlungsdurchlässige Matrizenoberfläche erfolgt. Im wesentlichen erfolgt dabei die Aushärtung der das Relief aufnehmenden Lackschicht vor Abnahme der Matrize vom Papier bzw. Karton. Nach diesem Verfahren sollen sowohl selbstklebende Produkte als auch Heißsiegelfolien mit Diffraktionsstrukturen herstellbar sein.

Durch dieses Verfahren sind Diffraktionsstrukturen zwar relativ kostengünstig und bequem auf ein Substrat replizierbar bzw. applizierbar, allerdings ist ein derartiges Verfahren bzw. das derart hergestellte Produkt für eine Reihe von Anwendungen nicht geeignet.
Für Anwendungen als beispielsweise als Sicherheitselemente sind die Oberflächenstrukturen nach diesem Verfahren zu wenig präzise herstellbar, da einerseits der verwendete Quarzglas-Prägezylinder insbesondere die Oberfläche nicht präzise und homogen genug herstellbar ist. Die für die Matrize verwendeten Fotopolymere sind unter den Verfahrensbedingungen nur schlecht beständig, wodurch die Lebensdauer des Prägewerkzeugs nur gering ist. Die Übertragung der Oberflächenstruktur in eine Lackschicht, die noch während die Matrize auf dem Trägerpapier bzw. Karton aufliegt, vollständig ausgehärtet wird, ist außerdem zuwenig exakt, da bei Abnahme der Matrize nach der Aushärtung die Lackschicht und damit die Oberflächenstruktur gegebenenfalls mechanisch nicht zur Gänze unversehrt bleibt.
Die verwendbaren Lacke sind sehr beschränkt, da sich in der Praxis nur kationisch härtbare UV-Lacke als geeignet erwiesen haben.

Üblicherweise weisen derartige Folien mit vorzugsweise transferierbaren Oberflächenstrukturen eine Releaseschicht auf. Das erfordert die Aufbringung einer zusätzlichen Schicht auf der Folie, einen zusätzlichen Arbeitsgang. Femer bestehen bei den bekannten Zusammensetzungen der Releaseschichten (insbesondere wenn sie Wachse enthalten) meist Probleme bei der Aufbringung der darauffolgenden Schichten, insbesondere bei der gleichmäßigen Haftung dieser Schichten. Femer bedeutet das Vorhandensein einer weiteren Schicht in der Regel zusätzliche Umweltbelastungen nicht nur durch Abfall- und Nebenprodukte im Produktionsprozess, sondern auch bei der anschließenden bestimmungsgemäßen Verwendung der Folie.

Aufgabe der Erfindung ist es daher ein Substrat, das mit strukturierten oder unstrukturierten Schichten und/oder einer Diffraktions- bzw. Beugungsstruktur oder einem Oberflächenrelief versehen ist, ohne Releaseschicht bereitzustellen und ein Verfahren zu dessen Herstellung, bei dem einerseits die Abbildung der Diffraktionsstruktur unabhängig von der Art des Trägersubstrats mit ausgezeichneter Präzision erfolgt, andererseits die Trägerfolie bzw. die darauf befindlichen strukturierten oder unstrukturierten Schichten und/oder Diffraktionsstrukturen ohne Beeinträchtigung mit in der Verpackungsindustrie oder in anderen technischen Bereichen, beispielsweise im Architekturbereich bei der Herstellung von Bauteilen, üblichen Parametern ohne Einschränkung verarbeitet bzw. transferiert werden kann. Es soll sowohl eine wirtschaftliche und umweltfreundliche Herstellung als auch eine einfache Transferierbarkeit und eine ausgezeichnete Beständigkeit der auf der Folie vorhandenen strukturierten und/oder unstrukturierten Schichten und/oder Oberflächenstrukturen gewährleistet sein.

Gegenstand der Erfindung sind daher Substrate mit vorzugsweise transferierbaren strukturierten und/oder unstrukturierten Schichten und/oder Oberflächenstrukturen, dadurch gekennzeichnet, dass die strukturierten und/oder unstrukturierten Schichten auf oder in eine vorerst thermoplastische Lackschicht aufgebracht sind und/oder gegebenenfalls eine Oberflächenstruktur durch Abformen einer Matrize in eine vorerst thermoplastische Lackschicht unter Druck und Temperatur erzeugt ist, und/oder eine Struktur durch Prägen geformt ist und worauf ein Stabilisieren der vorerst thermoplastischen Lackschicht erfolgt.

Ein weiterer Gegenstand der Erfindung ist ein Verfahren zur Herstellung von Substraten mit vorzugsweise transferierbaren strukturierten und/oder unstrukturierten Schichten und/oder Oberflächenstrukturen, dadurch gekennzeichnet, dass in einem ersten Schritt ein Trägersubstrat bereitgestellt wird, in einem zweiten Schritt dieses Trägersubstrat in einem Beschichtungsverfahren mit dem erfindungsgemäßen Lack beschichtet wird, in einem weiteren Schritt strukturierte und/oder unstrukturierte Schichten auf oder eingebracht werden, gegebenenfalls eine Abformung der Oberflächenstruktur in den in diesem Stadium thermoplastischen Lack durchgeführt wird und/oder der erfindungsgemäße Lack partiell oder vollflächig bedruckt wird und in einem weiteren Schritt die Stabilisierung des Lacks erfolgt.

Als Trägersubstrat kommen beispielsweise Trägerfolien vorzugsweise flexible Kunststofffolien, beispielsweise aus Pl, PP, MOPP, PE, PPS, PEEK, PEK, PEI, PSU, PAEK, LCP, PEN, PBT, PET, PA, PC, COC, POM, ABS, PVC in Frage. Die Trägerfolien weisen vorzugsweise eine Dicke von 5 - 700 µm, bevorzugt 8 - 200 µm, besonders bevorzugt 12 - 50 µm auf.

Ferner können als Trägersubstrat auch Metallfolien, beispielsweise Al-, Cu-, Sn-, Ni-, Fe- oder Edelstahlfolien mit einer Dicke von 5 - 200 µm, vorzugsweise 10 bis 80 µm, besonders bevorzugt 20 - 50 µm dienen. Die Folien können auch oberflächenbehandelt, beschichtet oder kaschiert beispielsweise mit Kunststoffen oder lackiert sein.

Ferner können als Trägersubstrate auch Papier oder Verbunde mit Papier, beispielsweise Verbunde mit Kunststoffen mit einem Flächengewicht von 20 - 500 g/m², vorzugsweise 40 - 200 g/m². verwendet werden.

Femer können als Trägersubstrate Gewebe und Vliese, wie Endlosfaservliese, Stapelfaservliese und dergleichen, die gegebenenfalls vemadelt oder kalandriert sein können, verwendet werden. Vorzugsweise bestehen solche Gewebe oder Vliese aus Kunststoffen, wie PP, PET, PA, PPS und dergleichen, es können aber auch Vliese aus natürlichen, gegebenenfalls behandelten Fasern, wie Viskosefaservliese eingesetzt werden. Die eingesetzten Vliese weisen ein Flächengewicht von etwa 20 g/m² bis 500 g/m² auf.

Das Trägersubstrat kann ein- oder beidseitig mit einem Heiß- oder Kaltsiegelkleber oder einer Selbstklebebeschichtung versehen sein oder nach der Aufbringung der strukturierten und/oder unstrukturierten Schichten und/oder der Oberflächenstruktur und/oder gegebenenfalls nach Durchführung weiterer Beschichtungsschritte damit versehen werden.
Ferner können auf dem Trägersubstrat bereits eine oder mehrere partielle und/oder vollflächige strukturierte und/oder strukturierte Schichten vorhanden sein.

Der erfindungsgemäße vorerst thermoplastische Lack, der anschließend stabilisiert wird, besteht aus einer Basis MMA oder Ethylcellulose oder Cycloolefincopolymer, wobei dem Basispolymer zur Einstellung der geforderten thermoplastischen Eigenschaften bzw. zur Einstellung der anschließenden Stabilisierbarkeit Modifikatoren zugesetzt werden.

In Abhängigkeit vom Basispolymer kommen als Modifikatoren beispielsweise Additive zur Einstellung der gewünschten Glastemperatur, des Bereichs in dem sich der Lack in thermoplastischem Zustand befindet, oder Modifikatoren zur Erreichung einer dauerhaften Aushärtung des Lacks in Frage.

Vorzugsweise werden die Komponenten in einem Lösungsmittel, beispielsweise in wässrigen Lösungsmitteln, Wasser, Alkoholen, Ethylacetat, Methylethylketon und dergleichen oder deren Mischungen gelöst.

Einem Lack auf Basis von MMA wird beispielsweise besonders vorteilhaft Nitrocellulose zur Erhöhung der Glastemperatur zugesetzt.
Einem Lack auf der Basis von Cycloolefincopolymeren werden beispielsweise besonders vorteilhaft Polyethylenwachse zugesetzt.
Einem Lack auf Basis von Ethylcellulose werden zur Einstellung der Härtbarkeit handelsübliche Crosslinker zugesetzt.

Die Konzentration des Basispolymeren im fertigen Lack beträgt in Abhängigkeit vom Basispolymeren, von den gewünschten Eigenschaften des Lacks und von der Art und Konzentration der Modifikatoren 4 - 50%.

Der erfindungsgemäße Lack kann transferierbar aber auch haftend mit oder ohne Haftvermittler eingestellt werden, sodass sich je nach verwendetem Substrat gegebenenfalls die Aufbringung einer Releaseschicht erübrigt.

Der erfindungsgemäße Lack kann gefärbt und/oder pigmentiert sein, wobei alle bekannten und üblichen Pigmente, beispielsweise anorganische und/oder organische Pigmente wie beispielsweise Titandioxid, Zinksulfid, Kaolin, Bariumsulfat, Aluminium-, Chrom- und Siliciumoxide, Metallpigmente (beispielsweise Kupfer, Aluminium, Silber, Gold, Eisen, Chrom und dergleichen), Metalllegierungen, wie Kupfer-Zink oder Kupfer- Aluminium als auch farbige ggf. organische Pigmente, wie Phthalocyaninblau, i-Indolidingelb, Dioxazinviolett, oder auch amorphe oder kristalline keramische Pigmente wie ITO, ATO, FTO und dergleichen oder auch Flüssigkristallpigmente geeignet sind.

Das Trägersubstrat wird in jedem bekannten Beschichtungsverfahren wie beispielsweise durch Aufstreichen, Gießen, Sprühen, Drucken (Siebdruck-, Tiefdruck- Flexodruck, oder Digitaldruckverfahren) oder Walzenauftragsverfahren mit einem erfindungsgemäßen Lack beschichtet. Die Beschichtung kann selektiv oder vollflächig erfolgen.

Die Schichtdicke des aufgebrachten erfindungsgemäßen Lacks kann je nach Anforderung an das Endprodukt und Dicke des Substrats variieren und beträgt im allgemeinen zwischen 0,5 und 50 µm, vorzugsweise zwischen 2 und 10 µm, besonders bevorzugt zwischen 2 und 5 µm.

Anschließend wird der aufgebrachte erfindungsgemäße Lack getrocknet.

Falls gewünscht kann nun die Strukturierung mittels eines konventionellen thermischen Prägeverfahrens erfolgen oder funktionelle und/oder dekorative unstrukturierte und/oder strukturierte Schichten partiell oder vollflächig aufgebracht werden.

Unter Oberflächenstrukturen werden im folgenden beispielsweise insbesondere Diffraktions- bzw. Beugungs- und Reliefstrukturen verstanden.

Insbesondere bei Vorhandensein von geblockten Isocyanaten im thermoplastischen Lack kann eine gewünschte Abformung einer Oberflächenstruktur ohne vorheriges Trocknen der Lackschicht erfolgen.
Die Abformung der Oberflächenstruktur, also der Diffraktions-, Beugungs- oder Reliefstruktur erfolgt beispielsweise bei kontrollierter Temperatur und unter Druck mittels einer Matrize oder unter Verwendung einer Prägeform in die zu diesem Zeitpunkt thermoplastische Lackschicht.

Die Abformung der Oberflächenstruktur kann registergenau zu einer etwa schon vorhandenen Beschichtung des Trägersubstrats erfolgen, wobei eine Toleranz von +/- 0,1 mm eingehalten werden kann. Dies wird durch eine Registersteuerung erreicht.

Die in den vorerst thermoplastischen Lack eingebrachte Oberflächenstruktur zeichnet sich durch große Präzision aus.

In einem weiteren Schritt kann dann entweder sofort die Stabilisierung des erfindungsgemäßen thermoplastischen Lacks je nach dessen Zusammensetzung durch Vernetzung beispielsweise mittels Strahlungshärtung oder durch thermische Aushärtung durch Temperaturerhöhung erfolgen oder durch Überdrucken mit einer vernetzenden Lackschicht, einer sogenannten Stützlackschicht, die anschließend ausgehärtet wird.

Es ist aber auch möglich vorerst weitere funktionelle oder dekorative Schichten auf die Oberflächenstruktur oder den Lack aufzubringen und erst im Anschluss den thermoplastischen Lack auf oben beschriebene Weise auszuhärten. Ferner ist es auch möglich gegebenenfalls nach Aufbringen einer oder mehrerer weiterer funktioneller Schichten erneut eine Schicht des erfindungsgemäßen Lacks aufzutragen und eine etwaige weitere Oberflächenstruktur auf oben beschriebene Weise abzuformen. Dabei kann beispielsweise eine teilweise Entprägung der ursprünglichen Oberflächenstruktur erfolgen. Es können aber auch in oder auf die weitere erfindungsgemäße vorerst thermoplastische Lackschicht weitere strukturierte und/oder unstrukturierte funktionelle und/oder dekorative Schichten auf- oder eingebracht werden

Die erfindungsgemäße vorerst thermoplastische Lackschicht bleibt bis zur endgültigen Stabilisierung veränderbar. Nach dieser Behandlung ist die Lackschicht stabil.

Die Stabilisierung des Lacks kann durch Trocknen, Aushärten oder durch Aufbringen einer weiteren vemetzbaren Lackschicht, deren reaktive Bestandteile in die erfindungsgemäße Lackschicht eindringen können und vemetzen oder an der Oberfläche verbleiben können und die erfindungsgemäße Lackschicht mechanisch stützen, und an der Oberfläche vernetzen, erfolgen.

Nach der endgültigen Aushärtung weist eine Struktur bzw. die Schichten ausgezeichnete Beständigkeit, insbesondere chemische, thermische und mechanische Beständigkeit auf.

Das Produkt ist gegebenenfalls nach entsprechender Konfektionierung daher als Sicherheitselement in Datenträgern, insbesondere Wertdokumenten wie Ausweisen, Karten, Banknoten oder Etiketten, Siegeln und dergleichen geeignet, aber auch als Verpackungsmaterial in der pharmazeutischen und Lebensmittelindustrie, beispielsweise in Form Blisterfolien, beispielsweise für Medikamente, Abdeckungen oder Verpackungen, beispielsweise in der Lebensmittelindustrie als Lebensmittelfolie beispielsweise für Molkereiprodukte besonders geeignet. Besonders geeignet sind derartige Produkte auch für dekorative Anwendungen oder optische Elemente, beispielsweise in der Architektur und dergleichen.

Das so mit einer strukturierten oder unstrukturierten Schicht versehene Trägersubstrat kann, wie erwähnt, anschließend mit weiteren Schichten versehen werden oder bereits derartige Schichten aufweisen, beispielsweise weitere Lack-, Farb- oder metallische Schichten oder Isolatoren, die jeweils unterschiedliche ähnliche oder auch gleiche Eigenschaften aufweisen können.

Dabei kann die Aufbringung der weiteren Schichten entweder selektiv, überlappend oder deckungsgleich mit der Oberflächenstruktur bzw. den strukturierten und/oder unstrukturierten Schichten oder auch nur in jenen Bereichen die bei selektivem Aufbringen der Struktur ausgespart wurden erfolgen. Es kann aber auch eine vollflächige Beschichtung vorgenommen werden.

Zur Herstellung sogenannter partieller Hologramme kann auch vor dem Aufbringen weiterer Schichten, beispielsweise einer Metallschicht die geprägte Struktur mit einem anderen bekannten oder wie oben beschrieben einem erfindungsgemäßen Lack mit gleichem oder ähnlichen Brechungsindex wie der des verwendeten erfindungsgemäßen Lacksystems partiell überdruckt werden. Dadurch wird selektiv die Oberflächenstruktur in den überdruckten Bereichen unsichtbar, sozusagen gelöscht. Dieser Lack kann dabei transparent oder farblos oder aber auch lumineszierend, beispielsweise fluoreszierend oder phosphoreszierend sein.

Zur Herstellung partiell metallisierter oder partiell mit einer Lack- oder Farblackschicht versehener Oberflächenstrukturen empfiehlt es sich vorerst einen Farbauftrag in Form einer Codierung bzw. einer negativen Codierung aufzubringen.

Die Aufbringung des Farbauftrags kann anschließend an den Prägevorgang in einem Arbeitsgang registergesteuert oder in einem weiteren Druckwerk insettergesteuert durch ein beliebiges Verfahren, beispielsweise durch Tiefdruck, Flexodruck, Siebdruck, Digitaldruck und dergleichen erfolgen. Die verwendete Farbe bzw. der verwendete Farblack ist in einem Lösungsmittel, vorzugsweise in Wasser löslich, es kann jedoch auch eine in jedem beliebigen Lösungsmittel, beispielsweise in Alkohol, Estern und dergleichen lösliche Farbe verwendet werden. Die Farbe bzw. der Farblack können übliche Zusammensetzungen auf Basis von natürlichen oder künstlichen Makromolekülen sein. Die lösliche Farbe kann pigmentiert oder nicht pigmentiert sein. Als Pigmente können alle bekannten Pigmente verwendet werden. Besonders geeignet sind TiO₂, ZnS, Kaolin und dergleichen.

Anschließend kann das bedruckte Trägersubstrat gegebenenfalls zur Verbesserung der Haftung der nachfolgend aufgebrachten Schicht mittels eines Inline-Plasma- (Niederdruck- oder Atmosphärenplasma-), Corona- oder Flammprozesses behandelt werden. Durch energiereiches Plasma, beispielsweise Ar- oder Ar/O₂-Plasma wird die Oberfläche von Tonungsresten der Druckfarben gereinigt. Dabei wird die notwendige scharfe Abgrenzung der Konturen der Aussparungen, die für die notwenige Präzision der Codierung notwendig ist, erreicht. Gleichzeitig wird die Oberfläche aktiviert. Dabei werden endständige polare Gruppen an der Oberfläche erzeugt. Dadurch wird die Haftung von Metallen und dergleichen an der Oberfläche verbessert.

Gegebenenfalls kann gleichzeitig mit der Anwendung der Plasma- bzw. Corona- oder Flammbehandlung insbesondere auch bei anschließender Aufbringung metallischer Schichten eine dünne Metall- oder Metalloxidschicht als Haftvermittler, beispielsweise durch Sputtem oder Aufdampfen aufgebracht werden. Besonders geeignet sind dabei Cr, Al, Ag, Ti, Cu, TiO₂, Si-Oxide oder Chromoxide. Diese Haftvermittlerschicht weist im allgemeinen eine Dicke von 0,1 nm - 5nm, vorzugsweise 0,2 nm - 2nm, besonders bevorzugt 0,2 bis 1 nm auf.

Dadurch wird die Haftung einer partiell oder vollflächig aufgebrachten strukturierten weiteren funktionellen Schicht weiter verbessert. Das ist Voraussetzung für die Erzeugung von funktionellen Schichten mit hoher Präzision und guter Haftung.

Um das Anlösen der abgedeckten Farbschicht weiter zu verbessern kann auch vollflächig oder passergenau eine dünne hochpigmentierte Farbschicht oder eine reine Pigmentschicht aufgebracht werden, wobei die Dicke dieser Schicht etwa 0,01 - 5 µm beträgt.

Allerdings wird bei den erfindungsgemäßen Lacken eine ausgezeichnete Haftung metallischer Schichten erreicht, sodass sich eine derartige Vorbehandlung weitestgehend erübrigt und keine relevante Verbesserung der Haftung bringt.

Es können aber auch beispielsweise in bekannten Direktmetallisierungsverfahren oder in Metallisierungsverfahren mit Ätzen partielle Metallschichten bzw. in bekannten Mehrfarben-Druckverfahren weitere Schichten aufgebracht werden.

Als weitere Farb- bzw. Lackschichten können jeweils verschiedenste Zusammensetzungen verwendet werden. Die Zusammensetzung der einzelnen Schichten kann insbesondere nach deren Aufgabe variieren, also ob die einzelnen Schichten ausschließlich Dekorationszwecken dienen oder eine funktionelle Schicht sein sollen oder ob die Schicht sowohl eine Dekorationsals auch eine funktionelle Schicht sein soll.

Die zu druckenden Schichten können pigmentiert oder nicht pigmentiert sein. Als Pigmente können alle bekannten Pigmente, wie beispielsweise Titandioxid, Zinksulfid, Kaolin, ATO, FTO, Aluminium, Chrom- und Siliciumoxide als auch farbige Pigmente verwendet werden. Dabei sind lösungsmittelhaltige Lacksysteme als auch System ohne Lösungsmittel verwendbar.
Als Bindemittel kommen verschiedene natürliche oder synthetische Bindemittel in Frage.

Die funktionellen Schichten beispielsweise können bestimmte elektrische, magnetische, chemische, physikalische und auch optische Eigenschaften aufweisen.

Zur Einstellung elektrischer Eigenschaften, beispielsweise Leitfähigkeit können beispielsweise Graphit, Ruß, leitfähige organische oder anorganische Polymere. Metallpigmente (beispielsweise Kupfer, Aluminium, Silber, Gold, Eisen, Chrom und dergleichen), Metalllegierungen wie Kupfer-Zink oder Kupfer-Aluminium oder auch amorphe oder kristalline keramische Pigmente wie ITO und dergleichen zugegeben werden. Weiters können auch dotierte oder nicht dotierte Halbleiter wie beispielsweise Silicium, Germanium oder lonenleiter wie amorphe oder kristalline Metalloxide oder Metallsulfide als Zusatz verwendet werden. Femer können zur Einstellung der elektrischen Eigenschaften der Schicht polare oder teilweise polare Verbindungen, wie Tenside oder unpolare Verbindungen wie Silikonadditive oder hygroskopische oder nicht hygroskopische Salze verwendet oder zugesetzt werden.

Zur Einstellung der magnetischen Eigenschaften können paramagnetische, diamagnetische und auch ferromagnetische Stoffe, wie Eisen, Nickel und Cobalt oder deren Verbindungen oder Salze (beispielsweise Oxide oder Sulfide) verwendet werden.

Besonders geeignet sind Magnetpigmentfarben mit Pigmenten auf Basis von Fe-oxiden, Eisen, Nickel Cobalt und deren Legierungen, Barium oder Cobaltferrite, hart- und weich magnetische Eisen- und Stahlsorten in wässrigen bzw. lösungsmittelhaltigen Dispersionen. Als Lösungsmittel kommen beispielsweise i-Propanol, Ethylacetat, Methylethylketon, Methoxypropanol und deren Mischungen in Frage.
Vorzugsweise sind die Pigmente in Acrylat- Polymerdispersionen mit einem Molekulargewicht von 150.000 bis 300.000, in Nitrocellulose, Acrylat-Urethan-Dispersionen, Acrylat- Styrol oder PVC-haltigen Dispersionen oder in lösemittelhaltige derartige Dispersionen eingebracht.

Die optischen Eigenschaften der Schicht lassen sich durch sichtbare Farbstoffe bzw. Pigmente, lumineszierende Farbstoffe bzw. Pigmente, die im sichtbaren, im UV-Bereich oder im IR-Bereich fluoreszieren bzw. phosphoreszieren, Effektpigmente, wie Flüssigkristalle, Perlglanz, Bronzen und/oder Multilayer-Farbumschlagpigmente und wärmeempfindliche Farben bzw. Pigmente beeinflussen. Diese sind in allen möglichen Kombinationen einsetzbar. Zusätzlich können auch phosphoreszierende Pigmente allein oder in Kombination mit anderen Farbstoffen und/oder Pigmenten eingesetzt werden.

Es können auch verschiedene Eigenschaften durch Zufügen verschiedener oben genannter Zusätze kombiniert werden. So ist es möglich angefärbte und/oder leitfähige Magnetpigmente zu verwenden. Dabei sind alle genannten leitfähigen Zusätze verwendbar.
Speziell zum Anfärben von Magnetpigmenten lassen sich alle bekannten löslichen und nicht löslichen Farbstoffe bzw. Pigmente verwenden. So kann beispielsweise eine braune Magnetfarbe durch Zugabe von Metallen in ihrem Farbton metallisch, z.B. silbrig eingestellt werden.

Femer können beispielsweise Isolatorschichten aufgebracht werden. Als Isolatoren sind beispielsweise organische Substanzen und deren Derivate und Verbindungen, beispielsweise Farb- und Lacksysteme, z.B. Epoxy-, Polyester-, Kolophonium-, Acrylat-, Alkyd-, Melamin-, PVA-, PVC-, Isocyanat-, Urethansysteme, die strahlungshärtend sein können, beispielsweise durch Wärme- oder UV-Strahlung, geeignet.

Diese Schichten können durch bekannte Verfahren, beispielsweise durch Bedampfen, Sputtem, Drucken (beispielsweise Tief-, Flexo-, Sieb-, Digitaldruck) und dergleichen), Sprühen, Galvanisieren, Walzenauftragsverfahren und dergleichen aufgebracht werden. Die Dicke derartiger funktioneller Schichten beträgt 0,001 bis 50 µm, vorzugsweise 0,1 bis 20 µm.

Durch ein- oder mehrmalige Wiederholung eines oder mehrerer beschriebener Verfahrensschritte können Multilayer-Aufbauten hergestellt werden, die in den übereinander aufgebrachten Schichten unterschiedliche Eigenschaften aufweisen. Es ist dabei möglich durch Kombination von verschiedenen Eigenschaften der einzelnen Schichten, beispielsweise Schichten mit unterschiedlicher Leitfähigkeit, Magnetisierbarkeit, optischen Eigenschaften, Absorptionsverhalten und dergleichen Aufbauten zum Beispiel für Sicherheitselemente mit mehreren präzisen Echtheitsmerkmalen herzustellen.

Gegebenenfalls kann die so hergestellte beschichtete Folie auch noch durch eine Schutzlackschicht geschützt werden oder beispielsweise durch Kaschieren oder dergleichen weiterveredelt werden.

Gegebenenfalls kann das Produkt mit einem siegelfähigen Kleber, beispielsweise einem Heiß- oder Kaltsiegelkleber auf das entsprechende Trägermaterial appliziert werden, oder beispielsweise bei der Papierherstellung für Sicherheitspapiere durch übliche Verfahren in das Papier eingebettet werden.

Diese Siegelkleber können mit sichtbaren oder im UV Licht sichtbaren, fluoreszierenden, phosphoreszierenden oder Laser- und IR-Strahlung absorbierenden Merkmalen zur Erhöhung der Fälschungssicherheit ausgestattet sein. Diese Merkmale können auch in Form von Mustern oder Zeichen vorhanden sein oder farbliche Effekte zeigen, wobei im Prinzip beliebig viele Farben, vorzugsweise 1 bis 10 Farben oder Farbmischungen, möglich sind.

Das Trägersubstrat kann bei einseitiger Beschichtung nach der Anwendung entfernt werden oder am Produkt verbleiben. Dabei kann die Trägerfolie gegebenenfalls auf der nicht beschichteten Seite besonders ausgerüstet werden, beispielsweise kratzfest, antistatisch und dergleichen. Gleiches gilt für eine etwaige Lackschicht auf dem Trägersubstrat.

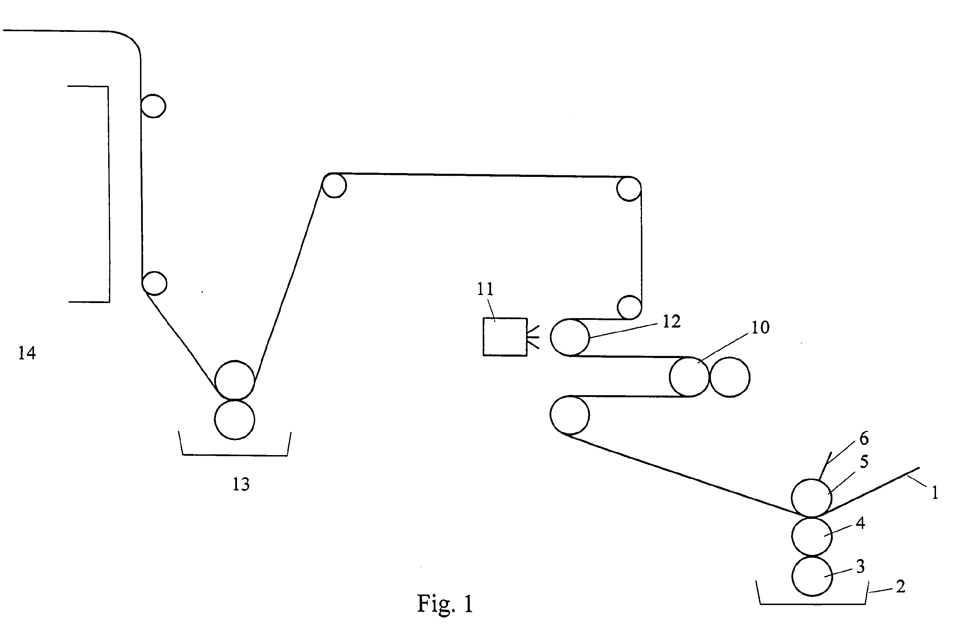

In Fig. 1 ist eine mögliche Ausführungsform eines derartigen Verfahrens zur Herstellung der erfindungsgemäßen Substrate dargestellt. Darin bedeuten 1 das Trägersubstrat, 2 die Lackwanne, die den erfindungsgemäßen Lack enthält, 3 den Tauchzylinder, 4 den Übertragszylinder, 5 den Tiefdruckzylinder, 6 eine Rakel, 10 den Prägezylinder für die optionale Abformung einer Oberflächenstruktur, 11 die Einrichtung, beispielsweise eine Strahlungsquelle, zur Stabilisierung des vorerst thermoplastischen Lacks bzw. ein Auftragswerk für die Aufbringung und Stabilisierung der die Schichten stützenden erfindungsgemäßen Zusammensetzung, 12 eine ggf. notwendige temperaturgesteuerte Kühlwalze, 13 ein beispielhaftes Tiefdruckwerk für die Aufbringung weiterer Schichten und 14 eine Trockenstation.
Es kann allerdings auch eine oder mehrere Einrichtungen 13 vor der Einrichtung zur Stabilisierung des vorerst thermoplastischen Lacks 11 situiert sein. Gegebenenfalls kann die Stabilisierung der vorerst thermoplastischen Lackschicht Inline nach Aufbringen weiterer Schichten als auch offline, ggf,. nach offline Aufbringung weiterer funktioneller und/oder thermoplastischer Schichten erfolgen.

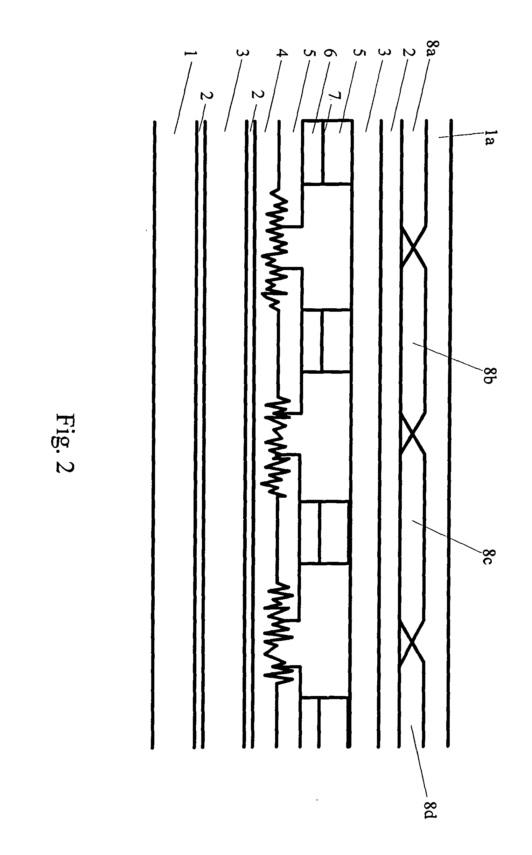

In Fig.2 ist ein möglicher Aufbau eines erfindungsgemäßen beschichteten Substrats dargestellt.
Darin bedeuten 1 einen Heißsiegelkleber, 2 eine PET Folie, 3 einen Primer, 4 die in den erfindungsgemäßen thermoplastischen Lack eingebrachte oberflächenstrukturierte Schicht, 5 eine partielle metallische Schicht, beispielsweise eine Al-Schicht, 6 eine magnetische Schicht, 7 eine Kleberschicht, 8 a bis 8d eine fluoreszierende Farbschicht mit Farbverlauf und 1 a die Stabilisierungsschicht.

### Beispiele

### Zusammensetzungen des erfindungsgemäßen Lacks

### Beispiel 1:

Eine Mischung aus Cycloolefincopolymeren (Norbornen) der Type Topas (Ticona, Oberhausen) bestehend aus 20% der Typen 8007 (T_{g} 80°C), und 80% 6017 (T_{g} 180°C) (10% in Xylol) wird zur Herstellung des erfindungsgemäßen Lacks mit 5% Polyethylenwachs vermischt.

### Beispiel 2:

Eine Mischung aus 1 Teil Ethylcellulose mit einer Viskosität von 70 mPa.s und 5 Teilen Ethylcellulose mit einer Viskosität von 200 mPa.s wird zur Herstellung des erfindungsgemäßen Lacks mit Crosslinker CX 100 (Fa.Avecia ) vermischt.

### Beispiel 3:

Eine 14 %ige Lösung aus gleichen Teilen von MMA mit einer T_{g} 105°C und einer T_{g} 119°C und 1 % mit Hydroxylgruppen modifiziertes Vinylchloridcopolymer in Methylethylketon wird mit einer 14%igen Nitrocelluloselösung in Etyhlacetat/Ethanol (17,5:1) vermischt.

### Zusammensetzung des Stabilisierungslacks

### Beispiel 4:

Der Stabilisierungslack besteht aus 10% VMCH, 5% Isocyanat, 85% Polyesteracrylat und kann durch UV-Strahlung gehärtet werden.

## Patentansprüche

1. Substrate mit vorzugsweise transferierbaren strukturierten und/oder unstrukturierten Schichten und/oder Oberflächenstrukturen, **dadurch gekennzeichnet, dass** die strukturierten und/oder unstrukturierten Schichten auf oder in eine vorerst thermoplastische Lackschicht aufgebracht sind und/oder gegebenenfalls eine Oberflächenstruktur durch Abformen einer Matrize in eine vorerst thermoplastische Lackschicht unter Druck und Temperatur erzeugt ist, und/oder eine Struktur durch Prägen geformt ist und worauf ein Stabilisieren der vorerst thermoplastischen Lackschicht erfolgt.

2. Substrate nach Anspruch 1, **dadurch gekennzeichnet, dass** das Stabilisieren der thermoplastischen Lackschicht nach Aufbringen von funktionellen Merkmalen durch Überdrucken und Stabilisieren mit einer Stützlackschicht erfolgt.

3. Substrate nach Anspruch 1, **dadurch gekennzeichnet, dass** die Stabilisierung durch Aushärten oder Vernetzen mittels Wärme oder Strahlung erfolgt.

4. Substrate nach einem der Ansprüche 1 bis 3, **dadurch gekennzeichnet, dass** die vorerst thermoplastische Lackschicht auf Basis von MMA oder Cycloolefincopolymeren oder Ethylcellulose aufgebaut ist und Modifikatoren enthält.

5. Substrate nach Anspruch4, **dadurch gekennzeichnet, dass** die vorerst thermoplastische Lackschicht auf Basis von MMA mit Nitrocellulose aufgebaut ist.

6. Substrate nach einem der Ansprüche 1 bis 5, **dadurch gekennzeichnet, dass** sie zwei oder mehrere vorerst thermoplastische Lackschichten aufweisen in oder auf die strukturierte und/oder unstrukturierte Schichten aufgebracht sind.

7. Substrate nach einem der Ansprüche 1 bis 6, **dadurch gekennzeichnet, dass** sie weitere funktionelle und/oder dekorative Schichten aufweisen.

8. Verfahren zur Herstellung von Substraten mit vorzugsweise transferierbaren strukturierten und/oder unstrukturierten Schichten und/oder Oberflächenstrukturen, **dadurch gekennzeichnet, dass** in einem ersten Schritt ein Trägersubstrat bereitgestellt wird, in einem zweiten Schritt dieses Trägersubstrat in einem Beschichtungsverfahren mit dem erfindungsgemäßen Lack beschichtet wird, in einem weiteren Schritt strukturierte und/oder unstrukturierte Schichten auf oder eingebracht werden, gegebenenfalls eine Abformung der Oberflächenstruktur in den in diesem Stadium thermoplastischen Lack durchgeführt wird und/oder der erfindungsgemäße Lack partiell oder vollflächig bedruckt wird und in einem weiteren Schritt die Stabilisierung des Lacks erfolgt.

9. Verfahren nach Anspruch 8, **dadurch gekennzeichnet, dass** die Stabilisierung durch Überdrucken mit einer Stützlackschicht oder durch Aushärtung oder Vernetzung der vorerst thermoplastischen Lackschicht durch Wärme oder Strahlung erfolgt.

10. Verfahren nach einem der Ansprüche 8 oder 9, **dadurch gekennzeichnet, dass** die Stabilisierung der vorerst thermoplastischen Lackschicht inline oder offline erfolgt.

11. Verwendung der Substrate gemäß einem der Ansprüche 1 bis 6, in der Dekoration, als Bauelemente, als optische Bauelemente im technischen Bereich und in der Architektur, als Sicherheitselemente für Wertdokumente und Datenträger, als Verpackungselemente in der Lebensmittel und pharmazeutischen Industrie.
